(19) Europäisches Patentamt
European Patent Office
Office européen des brevets

(11) **EP 2 660 116 A1**

(12) **EUROPEAN PATENT APPLICATION**
published in accordance with Art. 153(4) EPC

(43) Date of publication:
**06.11.2013 Bulletin 2013/45**

(51) Int Cl.:
**B60W 10/08** (2006.01)  **B60K 6/445** (2007.10)
**B60W 10/06** (2006.01)  **B60W 10/26** (2006.01)
**B60W 20/00** (2006.01)

(21) Application number: **10861414.0**

(22) Date of filing: **27.12.2010**

(86) International application number:
**PCT/JP2010/073524**

(87) International publication number:
**WO 2012/090263 (05.07.2012 Gazette 2012/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(71) Applicant: **TOYOTA JIDOSHA KABUSHIKI
KAISHA**
**Toyota-shi, Aichi-ken, 471-8571 (JP)**

(72) Inventors:
• **HAYASHI, Kazuhito**
**Toyota-shi**
**Aichi-ken 471-8571 (JP)**

• **YAMAZAKI, Mikio**
**Toyota-shi**
**Aichi-ken 471-8571 (JP)**
• **ERITATE, Kazunobu**
**Toyota-shi**
**Aichi-ken 471-8571 (JP)**

(74) Representative: **Intès, Didier Gérard André et al
Cabinet Beau de Loménie
158, rue de l'Université
75340 Paris Cedex 07 (FR)**

(54) **HYBRID VEHICLE AND CONTROL METHOD THEREFOR**

(57) A hybrid vehicle generates vehicle driving force by the sum of a direct torque mechanically transmitted directly from an engine (100) to a drive shaft (135) through a power split device (130) and an output torque of an MG (120). A PM-ECU (170) selectively applies a running mode in which outputs of the engine (100) and the MG (120) are controlled such that the requested driving force for the entire vehicle is exerted on the drive shaft (135); and an S/D mode in which the requested driving force is exerted on the drive shaft (135) by the direct torque in the state where the output torque of the MG (120) is set at zero. An MG-ECU (172) stops the operation of a power converter for controlling the output of the MG (120) when the S/D mode is applied.

FIG.1

**Description**

TECHNICAL FIELD

The present invention relates a hybrid vehicle and a method of controlling the hybrid vehicle, and more particularly to running control of the hybrid vehicle.

BACKGROUND ART

A hybrid vehicle provided with an engine and a traction motor each as a driving force source is characterized largely by having excellent fuel efficiency. As one embodiment of a hybrid vehicle, Japanese Patent Laying-Open No. 2009-196415 (PTD 1) discloses a driveline configuration in which an internal combustion engine and a motor generator (MG1, MG2) are coupled via a power split device.

In such a hybrid vehicle, driving force for the entire vehicle is generated by the sum of a direct torque mechanically transmitted directly from the engine to a drive shaft via the power split device and an output torque of the motor generator (MG2).

PTD 1 discloses that, when the temperature of the motor generator (MG2) exceeds a prescribed reference temperature, the torque command value of the motor generator is decreased while the decreased amount of the torque command value is compensated by a direct torque, thereby avoiding a shortage of the driving force for the entire vehicle.

Furthermore, Japanese Patent Laying-Open No. 2007-203772 (PTD 2) discloses running control in a hybrid vehicle having a driveline similar to that in PTD 1 for allowing a gradual decrease of the output shaft torque in the torque phase of an automatic transmission. It specifically discloses that, when a decrease in the requested output shaft torque is temporarily corrected prior to the torque phase, at least one of the engine and the motor generator is controlled so as to prevent an increase in the direct torque to the output shaft.

CITATION LIST

PATENT DOCUMENT

PTD 1: Japanese Patent Laying-Open No. 2009-196415
PTD 2: Japanese Patent Laying-Open No. 2007-203772

SUMMARY OF INVENTION

TECHNICAL PROBLEM

In such a hybrid vehicle as disclosed in PTD 1, fuel efficiency is improved by operating the engine at a highly-efficient operating point (torque/rotation speed). In other words, in the state where an operation line obtained as a collection of highly-efficient operating points is set in advance, the engine is controlled such that an operating point is set on this operation line in accordance with the output power from the engine. Then, when the requested driving force for the entire vehicle is excessive or insufficient by the engine output at the operating point, running control is performed so as to allow this excessive or insufficient amount of driving force to be covered by the output torque of the motor generator.

Therefore, in the hybrid vehicle, the requested driving force for the entire vehicle may be able to be ensured only by the output from the engine. In this case, the output torque of the motor generator can be set at zero. However, when an inverter performs electric motor control for setting the output torque at zero, switching loss occurs in the inverter. In other words, also in such a situation where the output of the motor generator (traction motor) is not required, loss resulting from electric motor control unnecessarily occurs. This loss causes a decrease in energy efficiency for the entire vehicle, thereby leading to deterioration in fuel efficiency.

The present invention has been made in order to solve the above-described problems. An object of the present invention is to reduce the loss resulting from driving control of a traction motor, thereby improving the fuel efficiency of a hybrid vehicle.

SOLUTION TO PROBLEM

According to an aspect of the present invention, a hybrid vehicle includes an internal combustion engine, an electric motor, a first power converter, a power transmission device, and a control device. The electric motor is configured to output a torque to a drive shaft mechanically coupled to a driving wheel. The power transmission device is configured to mechanically transmit a torque originating from an output of the internal combustion engine to the drive shaft. The first power converter is disposed for controlling an output torque of the electric motor. The control device is configured to control the output of each of the internal combustion engine and the electric motor such that requested driving force for an entire vehicle is exerted on the drive shaft. The control device includes a running control unit and an electric motor control unit. The running control unit is configured to selectively apply a first running mode (S/D mode) in which the requested driving force is exerted on the drive shaft by the output of the internal combustion engine in a state where the output torque of the electric motor is set at zero, and a second running mode (normal running mode) in which the requested driving force is exerted on the drive shaft by the output of each of the internal combustion engine and the electric motor. The electric motor control unit is configured to stop an operation of the first power converter in the second running mode.

Preferably, during the second running mode, the running control unit calculates a first target rotation speed (NE1) of the internal combustion engine for ensuring the requested driving force in a case where the output torque of the electric motor is set at zero, controls the output of each of the internal combustion engine and the electric motor so as to perform operating-point change control for bringing a rotation speed of the internal combustion engine close to the first target rotation speed, and performs switching from the second running mode to the first running mode when an absolute value of the output torque of the electric motor becomes smaller than a prescribed threshold value.

Further preferably, during the second running mode, the running control unit performs the operating-point change control when a difference between a second target rotation speed (NE2) of the internal combustion engine for ensuring the requested driving force in accordance with the second running mode and the first target rotation speed (NE1) is smaller than a prescribed threshold value.

Further preferably, during the second running mode, the running control unit performs the operating-point change control when an estimate value (F1) of a fuel consumption in a case where the internal combustion engine operates in accordance with the first running mode in a state where the operation of the first power converter is stopped is smaller than an estimate value (F2) of a fuel consumption in a case where the internal combustion engine operates in accordance with the second running mode.

Alternatively preferably, during the first running mode, the running control unit estimates a magnitude of a drag torque (Tm) acting as rotational resistance when the electric motor rotates at zero torque, and controls the output of the internal combustion engine such that a sum of the requested driving force and the estimated drag torque is exerted on the drive shaft.

Further preferably, the running control unit estimates the drag torque based on a rotation speed of the electric motor. Alternatively, the running control unit estimates the drag torque based on counter-electromotive force generated in the electric motor.

Preferably, the hybrid vehicle further includes a power generator for generating electric power by motive power from the internal combustion engine. The power transmission device includes a three-shaft type power split device. The power split device is mechanically coupled to three shafts including an output shaft of the internal combustion engine, an output shaft of the power generator and the drive shaft; and configured such that when rotation speeds of any two shafts of these three shafts are determined, a rotation speed of remaining one shaft is determined, and configured to, based on the motive power input to and output from any two shafts of these three shafts, input and output the motive power to and from remaining one shaft.

Further preferably, the first power converter performs bidirectional power conversion between a power line and the electric motor. The hybrid vehicle further includes a second power converter for performing bidirectional power conversion between the power line and the power generator; and a power storage device electrically connected to the power line. During the second running mode, the running control unit inhibits switching from the second running mode to the first running mode when an SOC of the power storage device is higher than a prescribed first threshold value in a case where the rotation speed of the electric motor falls within a region in which electric power is generated during rotation at zero torque.

Further preferably, during the first running mode, the running control unit forcibly performs switching from the first running mode to the second running mode when the SOC of the power storage device is increased above the first threshold value.

Alternatively further preferably, during the second running mode, the running control unit controls the output of each of the internal combustion engine, the electric motor and the power generator so as to generate the requested driving force while causing discharge of the power storage device, when the SOC of the power storage device is lower than the first threshold value and higher than a prescribed second threshold value that is lower than the first threshold value.

According to another aspect of the present invention, a method of controlling a hybrid vehicle is provided. The hybrid vehicle is equipped with an internal combustion engine, an electric motor configured to output a torque to a drive shaft mechanically coupled to a driving wheel, and a power transmission device for mechanically transmitting a torque originating from an output of the internal combustion engine to the drive shaft. The controlling method includes the steps of: calculating requested driving force for an entire vehicle based on a vehicle state; selecting a first running mode (S/D mode) in which the requested driving force is exerted on the drive shaft by the output of each of the internal combustion engine and the electric motor in a state where an output torque of the electric motor is set at zero and a second running mode (normal running mode) in which the requested driving force is exerted on the drive shaft by the output of each of the internal combustion engine and the electric motor; and stopping an operation of a power converter for controlling the output torque of the electric motor in the first running mode.

Preferably, the controlling method further includes the steps of: calculating a first target rotation speed of the internal combustion engine for ensuring the requested driving force when the output torque of the electric motor is set at zero during the second running mode; and performing operating-point change control for bringing a rotation speed of the internal combustion engine close to the first target rotation speed during the second running mode. Furthermore, the step of selecting selects the first running mode when an absolute value of the output torque of the second electric motor becomes smaller than a prescribed threshold value during the second running mode.

Further preferably, the controlling method further includes the steps of: calculating a second target rotation speed of the internal combustion engine for ensuring the requested driving force in accordance with the second running mode; and performing the operating-point change control when a difference between the first target rotation speed and the second target rotation speed is smaller than a prescribed threshold value.

Preferably, the controlling method further includes the steps of: estimating a magnitude of a drag torque acting as rotational resistance when the second electric motor rotates at zero torque during the first running mode; and incorporating the drag torque into the requested driving force during the first running mode.

ADVANTAGEOUS EFFECTS OF INVENTION

According to the present invention, the fuel efficiency of the hybrid vehicle can be improved by reducing the loss resulting from driving control of a traction motor.

BRIEF DESCRIPTION OF DRAWINGS

Fig. 1 is a block diagram for illustrating a configuration example of a hybrid vehicle according to the first embodiment of the present invention.
Fig. 2 is a circuit diagram illustrating a configuration example of an electrical system of the hybrid vehicle shown in Fig. 1.
Fig. 3 is a collinear diagram showing the relation of the rotation speeds among an engine, the first MG and the second MG in the hybrid vehicle shown in Fig. 1.
Fig. 4 is a collinear diagram during EV (Electric Vehicle) running of the hybrid vehicle shown in Fig. 1.
Fig. 5 is a collinear diagram at the start of the engine of the hybrid vehicle shown in Fig. 1.
Fig. 6 is the first flowchart illustrating running control of the hybrid vehicle according to the first embodiment.
Fig. 7 is the second flowchart illustrating running control of the hybrid vehicle according to the first embodiment.
Fig. 8 is a conceptual diagram for illustrating determination of an engine operating point.
Fig. 9 is a collinear diagram under the running control of the hybrid vehicle according to the first embodiment.
Fig. 10 shows an operation waveform at the time of switching from a normal running mode to an S/D mode under the running control of the hybrid vehicle according to the present first embodiment.
Fig. 11 is a flowchart illustrating a controlling process added by the running control of the hybrid vehicle according to the present second embodiment.
Fig. 12 is a schematic diagram illustrating a map for calculating a mechanical drag torque.
Fig. 13 is a flowchart illustrating a controlling process added by the running control of the hybrid vehicle according to the first modification of the present second embodiment.
Fig. 14 is a schematic diagram illustrating a map for calculating an electromagnetic drag torque.
Fig. 15 is a flowchart illustrating a controlling process added by the running control of the hybrid vehicle according to the second modification of the present second embodiment.
Fig. 16 is a flowchart illustrating a controlling process added by the running control of the hybrid vehicle according to the present third embodiment.
Fig. 17 is a flowchart illustrating a controlling process added by the running control of the hybrid vehicle according to the present fourth embodiment.

DESCRIPTION OF EMBODIMENTS

The embodiments of the present invention will be hereinafter described in detail with reference to the accompanying drawings, in which the same or corresponding components are designated by the same reference characters, and description thereof will not be basically repeated.

(First Embodiment)

(Vehicle Configuration)

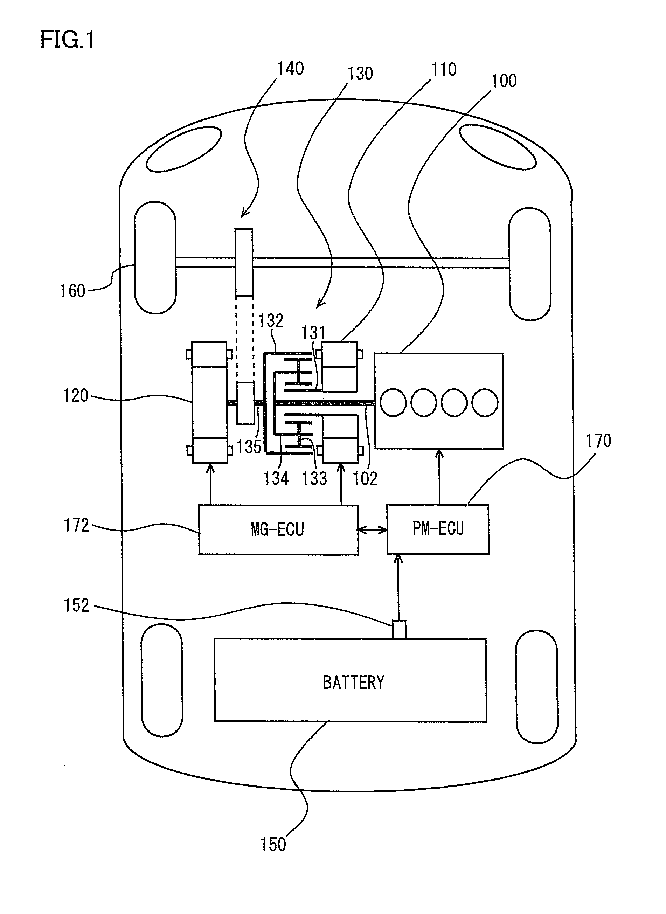

Fig. 1 is a block diagram for illustrating a configuration example of a hybrid vehicle according to the first embodiment of the present invention.

Referring to Fig. 1, a hybrid vehicle includes an engine 100 corresponding to an "internal combustion engine", a first MG (Motor Generator) 110, a second MG 120, a power split device 130, a reduction gear 140, a battery 150, a driving wheel 160, a PM (Power train Manager)-ECU (Electronic Control Unit) 170, and an MG (Motor Generator)-ECU 172.

The hybrid vehicle runs by a driving force from at least one of engine 100 and second MG 120. Engine 100, first MG 110 and second MG 120 are coupled to one another via power split device 130.

Power split device 130 is typically formed as a planetary gear mechanism. Power split device 130 includes a sun gear 131 that is an external gear, a ring gear 132 that is an internal gear and disposed concentrically with this sun gear 131, a plurality of pinion gears 133 that engage with sun gear 131 and also with ring gear 132, and a carrier 134. Carrier 134 is configured to hold the plurality of pinion gears 133 in a freely rotating and revolving manner.

Sun gear 131 is coupled to an output shaft of first MG 110. Ring gear 132 is rotatably supported coaxially with a crankshaft 102. Pinion gear 133 is disposed between sun gear 131 and ring gear 132, and revolves around sun gear 131 while rotating on its axis. Carrier 134 is coupled to the end of crankshaft 102 and supports the rotation shaft of each pinion gear 133.

Sun gear 131 and a ring gear shaft 135 rotate as ring gear 132 rotates. The output shaft of second MG 120 is coupled to ring gear shaft 135. Ring gear shaft 135 will be hereinafter also referred to as a drive shaft 135.

In addition, the output shaft of second MG 120 may be configured to be coupled to drive shaft 135 through a transmission. In the present embodiment, since the configuration not provided with a transmission is illustrated, the rotation speed ratio between second MG 120 and ring gear (drive shaft) 135 is 1:1. In contrast, in the configuration provided with a transmission, each of the rotation speed ratio and the torque ratio between drive shaft 135 and second MG 120 is determined by the gear ratio.

Drive shaft 135 is mechanically coupled to driving wheel 160 through reduction gear 140. Accordingly, the motive power output by power split device 130 to ring gear 132, that is, drive shaft 135, is to be output to driving wheel 160 through reduction gear 140. Although front wheels are used as driving wheels 160 in the example shown in Fig. 1, rear wheels may be used as driving wheels 160 or front wheels and rear wheels may be used as driving wheels 160.

Power split device 130 executes a differential action using sun gear 131, ring gear 132 and carrier 134 each as a rotating element. These three rotating elements are mechanically coupled to three shafts including crankshaft 102 of engine 100, the output shaft of first MG 110 and drive shaft 135. Also, power split device 130 is configured such that when the rotation speeds of any two shafts of these three shafts are determined, the rotation speed of remaining one shaft is determined, and also configured to, based on the motive power input to and output from any two shafts of these three shafts, input and output the motive power to and from remaining one shaft.

The motive power generated by engine 100 is split into two paths by power split device 130. One of the paths serves to drive driving wheel 160 through reduction gear 140 while the other of the paths serves to drive first MG 110 to generate electric power. When first MG 110 functions as a power generator, power split device 130 distributes the motive power, which is input from engine 100 through carrier 134, to the sun gear 131 side and the ring gear 132 side in accordance with the gear ratio. On the other hand, when first MG 110 functions as an electric motor, power split device 130 combines the motive power input from engine 100 through carrier 134 and the motive power input from first MG 110 through sun gear 131, and outputs the combined power to ring gear 132. In this way, power split device 130 functions as a "power transmission device" for mechanically transmitting, to drive shaft 135, the torque originating from the output of engine 100.

First MG 110 and second MG 120 each are representatively a three-phase alternating-current (AC) rotating electric machine formed of a permanent magnet motor.

First MG 110 can mainly operate as a "power generator" to generate electric power by the driving force from engine 100 split by power split device 130. The electric power generated by first MG 110 is variously used in accordance with the running state of the vehicle and the conditions of an SOC (State Of Charge) of battery 150. For example, at the time of the normal running of the vehicle, the electric power generated by first MG 110 is used as electric power for driving second MG 120. On the other hand, when the SOC of battery 150 is lower than a predetermined value, the electric power generated by first MG 110 is converted from the alternating current into a direct current by an inverter described later. Then, the voltage is adjusted by a converter described later and stored in battery 150. In addition, in the case where engine 100 is monitored at start-up of the engine, and the like, first MG 110 can also operate as an electric motor under the torque control.

Second MG 120 mainly operates as an "electric motor" and is driven by at least one of the electric power stored in battery 150 and the electric power generated by first MG 110. The motive power generated by second MG 120 is transmitted to drive shaft 135, and further transmitted to driving wheel 160 through reduction gear 140. Accordingly, second MG 120 assists engine 100, or causes the vehicle to run with the driving force from second MG 120.

During regenerative braking of a hybrid vehicle, second MG 120 is driven by driving wheel 160 through reduction gear 140. In this case, second MG 120 operates as a power generator. Accordingly, second MG 120 functions as a regenerative brake that converts braking energy into electric power. The electric power generated by second MG 120 is stored in battery 150.

Battery 150 serves as a battery pack having a configuration in which a plurality of battery modules each having a plurality of battery cells integrated with each other are connected in series. The voltage of battery 150 is approximately 200V, for example. Battery 150 can be charged with electric power generated by first MG 110 or second MG 120. The temperature, voltage and current of battery 150 are detected by a battery sensor 152. A temperature sensor, a voltage sensor and a current sensor are comprehensively indicated as battery sensor 152.

The charge power to battery 150 is limited so as not to exceed an upper limit value WIN. Similarly, the discharge power of battery 150 is limited so as not to exceed an upper limit value WOUT. Upper limit values WIN and WOUT are determined based on various parameters such as the SOC, the temperature, the change rate of the temperature and the like of battery 150.

PM-ECU 170 and MG-ECU 172 each are configured to incorporate a CPU (Central Processing Unit) and a memory which are not shown, and to perform operation processing based on the value detected by each sensor by means of software processing in accordance with the map and program stored in the memory. Alternatively, at least a part of the ECU may be configured to perform prescribed numerical operation processing and/or logical operation processing by means of hardware processing by a dedicated electronic circuit and the like.

Engine 100 is controlled in accordance with a control target value from PM (Power train Manager)-ECU (Electronic Control Unit) 170. First MG 110 and second MG 120 are controlled by MG-ECU 172. PM-ECU 170 and MG-ECU 172 are connected so as to allow bidirectional communication with each other. PM-ECU 170 generates a control target value (representatively, a torque target value) for each of engine 100, first MG 110 and second MG 120 by running control which will be described later. In other words, PM-ECU 170 executes a function of a "running control unit".

Then, MG-ECU 172 controls first MG 110 and second MG 120 in accordance with the control target value transmitted from PM-ECU 170. In other words, MG-ECU 172 executes a function of an "electric motor control unit". In addition, engine 100 controls fuel injection quantity, ignition timing and the like in accordance with the operation target value (representatively, a torque target value and a rotation speed target value) from PM-ECU 170.

Although PM-ECU 170 and MG-ECU 172 are formed of separate ECUs in the present embodiment, a single ECU comprehensively having both functions of these ECUs may be provided.

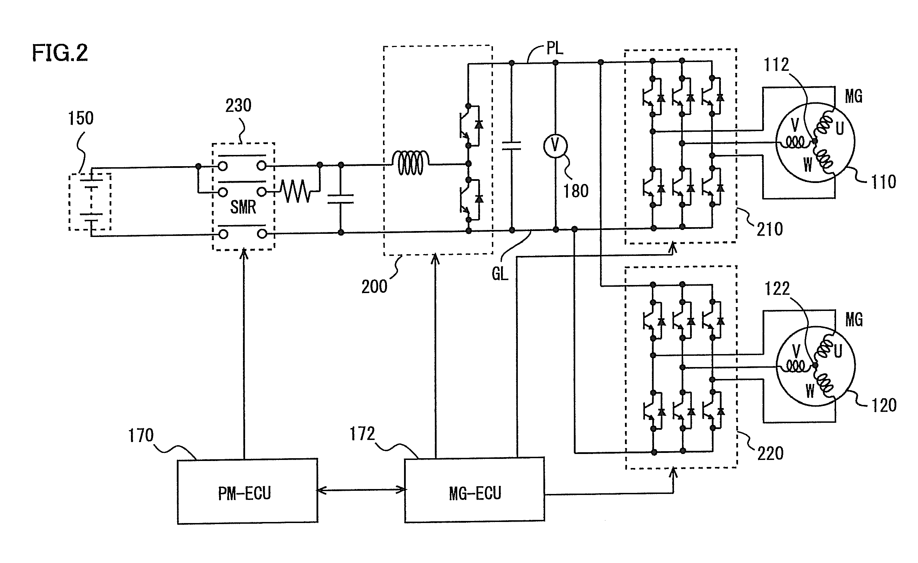

Fig. 2 is a circuit diagram illustrating a configuration example of an electrical system of the hybrid vehicle shown in Fig. 1.

Referring to Fig. 2, the electrical system of the hybrid vehicle is provided with a converter 200, an inverter 210 corresponding to first MG 110 (power generator), an inverter 220 corresponding to second MG 120 (electric motor), and an SMR (System Main Relay) 230. In other words, inverter 220 corresponds to the "first power converter" while inverter 210 corresponds to the "second power converter".

Converter 200 includes a reactor, two power semiconductor switching elements (which will be also simply referred to as a "switching element") connected in series, an antiparallel diode provided corresponding to each switching element, and a reactor. As a power semiconductor switching element, an IGBT (Insulated Gate Bipolar Transistor), a power MOS (Metal Oxide Semiconductor) transistor, a power bipolar transistor, and the like may be used as appropriate. The reactor has one end connected to battery 150 on its positive pole and the other end connected to the connection point between two switching elements. Each switching element is controlled by MG-ECU 170 to be turned on or off.

When the electric power discharged from battery 150 is supplied to first MG 110 or second MG 120, the voltage is raised by converter 200. In contrast, when battery 150 is charged with the electric power generated by first MG 110 or second MG 120, the voltage is lowered by converter 200.

Converter 200, inverter 210 and inverter 220 are electrically connected to one another through a power line PL and a ground line GL. A DC voltage (system voltage) VH on power line PL is detected by a voltage sensor 180. The results detected by voltage sensor 180 are transmitted to MG-ECU 172.

Inverter 210 is formed of a commonly-used three-phase inverter, and includes a U-phase arm, a V-phase arm and a W-phase arm that are connected in parallel. Each of the U-phase arm, the V-phase arm and the W-phase arm has two switching elements (an upper arm element and a lower arm element) connected in series. An antiparallel diode is connected to each switching element.

First MG 110 has a U-phase coil, a V-phase coil and a W-phase coil coupled in a star connection as a stator winding. Each phase coil has one end mutually connected at a neutral point 112 and also has the other end connected to a connection point between the switching elements of each phase arm of inverter 210.

During vehicle running, inverter 210 controls the current or voltage of each phase coil of first MG 110 such that first MG 110 operates in accordance with the operation command value (representatively, a torque target value) set for generating the driving force (vehicle driving torque, power generation torque, and the like) requested for vehicle running.

As with inverter 210, inverter 220 is formed of a commonly-used three-phase inverter. As with first MG 110, second MG 120 has a U-phase coil, a V-phase coil and a W-phase coil coupled in a star connection as a stator winding. Each phase coil has one end mutually connected at a neutral point 122 and also has the other end connected to a connection point between the switching elements of each phase arm of inverter 220.

During vehicle running, inverter 220 controls the current or voltage of each phase coil of second MG 120 such that second MG 120 operates in accordance with the operation command value (representatively, a torque target value) set for generating the driving force (vehicle driving torque, regenerative braking torque, and the like) requested for vehicle running.

In addition, for example, PWM (Pulse Width Modulation) control is used for controlling first MG 110 and second MG 120 by inverters 210 and 220, respectively. Since a well-known and commonly-used technique only has to be employed for PWM control, further detailed description thereof will not be repeated. MG-ECU 172 generates a driving signal for controlling the switching elements forming each of inverters 210 and 220 to be turned on and off in accordance with PWM control. In other words, during operation of inverters 210 and 220, switching loss occurs as each switching element is turned on or off.

An SMR 250 is provided between battery 150 and converter 200. When SMR 250 is opened, battery 150 is cut off from the electrical system. On the other hand, when SMR 250 is closed, battery 150 is connected to the electrical system. The state of SMR 250 is controlled by PM-ECU 170. For example, SMR 250 is closed in response to the operation of turning on a power-on switch (not shown) that instructs system startup of the hybrid vehicle while SMR 250 is opened in response to the operation of turning off the power-on switch.

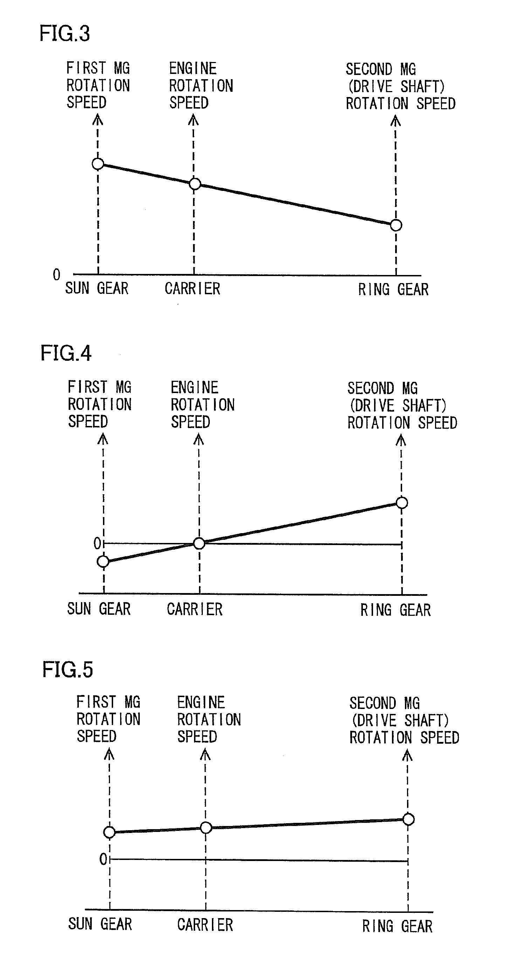

As described above, in the hybrid vehicle shown in Fig. 1, engine 100, first MG 110 and second MG 120 are coupled via a planetary gear. This establishes a relation in which the rotation speeds of engine 100, first MG 110 and second MG 120 are connected with a straight line in a collinear diagram, as shown in Fig. 3.

According to the hybrid vehicle, PM-ECU 170 executes running control for allowing vehicle running suitable for the vehicle state. For example, at the start of the vehicle and during low speed running, the hybrid vehicle runs with the output from second MG 120 in the state where engine 100 is stopped, as in the collinear diagram shown in Fig. 4. In this case, the rotation speed of second MG 120 is rendered positive while the rotation speed of first MG 110 is rendered negative.

During normal running, as in the collinear diagram shown in Fig. 5, the rotation speed of first MG 110 is rendered positive by operating first MG 110 as a motor such that engine 100 is cranked using first MG 110. In this case, first MG 110 operates as an electric motor. Then, engine 100 is started to cause the hybrid vehicle to run with the outputs from engine 100 and second MG 120. As will be described later in detail, a hybrid vehicle is improved in fuel efficiency by operating engine 100 at a highly-efficient operating point.

(Control Structure)

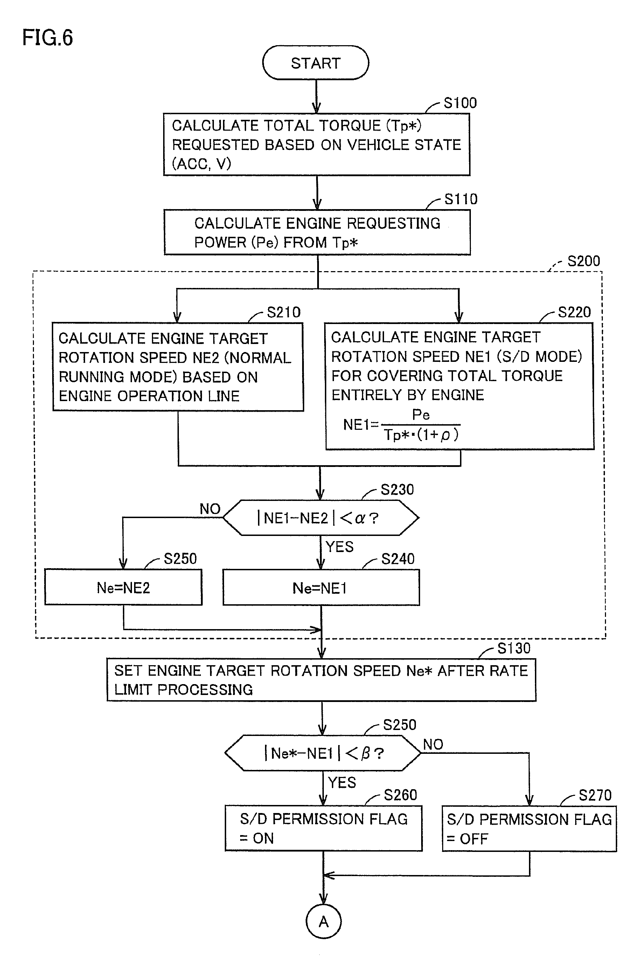

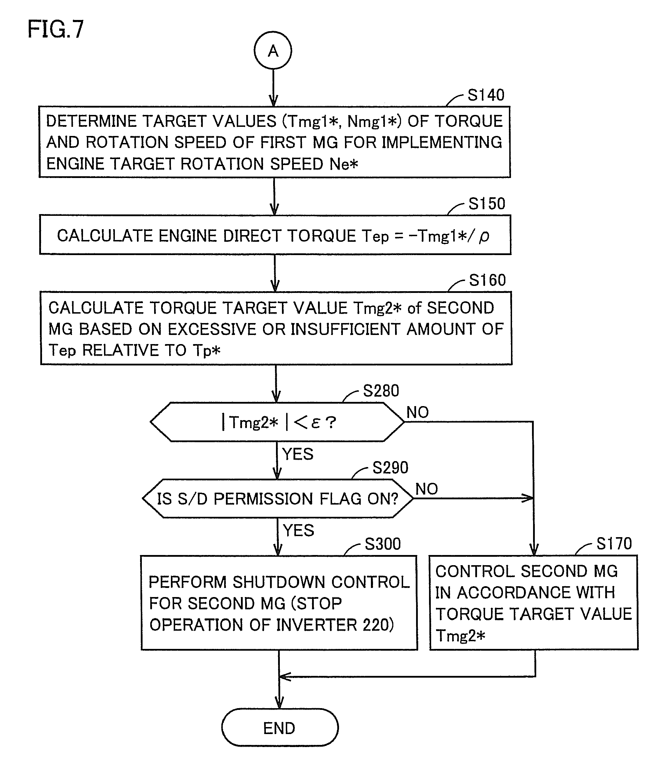

The running control for the hybrid vehicle according to the present first embodiment will be hereinafter described in detail. Figs. 6 and 7 each are a flowchart illustrating running control of the hybrid vehicle according to the first embodiment. The controlling process in accordance with the flowcharts shown in Figs. 6 and 7 is, for example, performed by PM-ECU 170 shown in Fig. 1 for each prescribed control cycle.

Referring to Fig. 6, in step S100, PM-ECU 170 calculates total driving force required in the entire vehicle based on the vehicle state detected based on the sensor output signal. Then, in order to generate this total driving force, PM-ECU 170 calculates a requested driving force Tp* that is to be output to drive shaft 135. The vehicle state reflected in calculation of the driving force typically includes an accelerator pedal position Acc showing the accelerator pedal operation amount by the user and a vehicle speed V of the hybrid vehicle.

For example, PM-ECU 170 stores, in the memory, a map (not shown) in which the relation among accelerator pedal position Acc, vehicle speed V and requested driving force Tp* is set in advance. Then, when accelerator pedal position Acc and vehicle speed V are detected, PM-ECU 170 can calculate requested driving force Tp* by referring to this map.

In this way, by adding the torque corresponding to requested driving force Tp* to drive shaft 135, the hybrid vehicle can generate appropriate vehicle driving force in accordance with the vehicle state. In the following, requested driving force Tp* will also be referred to as a total torque Tp*.

In step S110, PM-ECU 170 calculates engine requesting power Pe that is output power requested by engine 100 based on total torque Tp* calculated in step S100. For example, engine requesting power Pe is set according to the following equation (1) in accordance with total torque Tp*, a drive shaft rotation speed Nr, charge/discharge request power Pchg, and a loss term Loss.

$$Pe = Tp^* \bullet Nr + Pchg + Loss \qquad ... (1)$$

Charge/discharge request power Pchg is set such that Pchg > 0, when battery 150 needs to be charged in accordance with the state (SOC) of battery 150. On the other hand, when battery 150 is excessively charged and needs to be discharged, charge/discharge request power Pchg is set such that Pchg < 0.

Furthermore, PM-ECU 170 determines the operating point of engine 100 in step group S200. Step group S200 include steps S210 to S250 described below.

In step S210, PM-ECU 170 calculates engine target rotation speed NE1 in the normal running mode (second running mode) based on engine requesting power Pe.

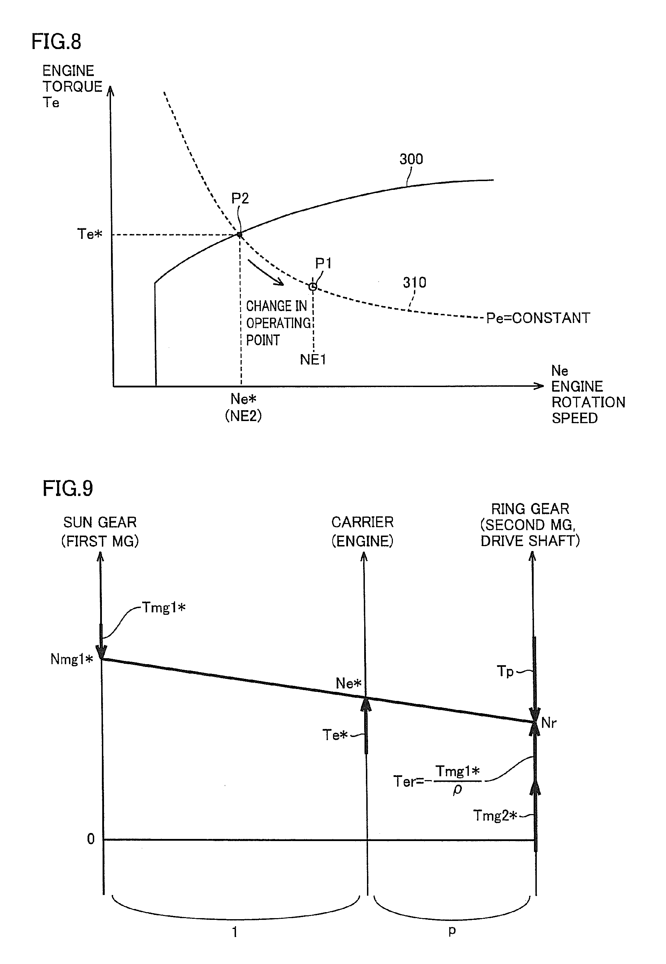

Fig. 8 is a conceptual diagram for illustrating determination of an engine operating point.

Referring to Fig. 8, the engine operating point is defined by the combination of engine rotation speed Ne and engine torque Te. The product of engine rotation speed Ne and engine torque Te corresponds to engine output power.

An operation line 300 is determined in advance as a collection of engine operating points at which engine 100 can be operated with high efficiency. Operation line 300 corresponds to an optimal fuel efficiency line for suppressing the fuel consumption when the same power is output.

In step S210, PM-ECU 170 determines an intersection between a predetermined operation line 300 and an equal-power line 310 corresponding to engine requesting power Pe calculated in step S 110 as an engine operating point (target rotation speed Ne* and target torque Te*), as shown in Fig. 8. In other words, the engine operating point in the normal running mode is determined as P2 in the figure. Engine target rotation speed NE2 calculated in step S210 is the engine rotation speed at an engine operating point P2.

Referring back to Fig. 6, in step S220, PM-ECU 170 calculates engine target rotation speed NE1 in the shutdown mode (hereinafter described as an S/D mode) in which control of second MG 120 is stopped. The S/D mode corresponds to the first running mode.

In the S/D mode, inverter 220 is shut down to stop switching of each switching element (fixed to be off). Thereby, control of second MG 120 is stopped and the output torque of second MG 120 becomes zero. In the S/D mode, no power loss (switching loss) occurs in inverter 220. Therefore, in the vehicle state in which the output of second MG 120 is not required, the fuel efficiency of the hybrid vehicle can be improved by applying the S/D mode.

In the S/D mode, it is necessary to determine an engine operating point such that total torque Tp* can be covered by engine 100 even if the output torque of second MG 120 is set at zero. Therefore, engine target rotation speed NE1 can be calculated according to the following equation (2) by using a gear ratio ρ in power split device 130.

$$NE1 = Pe/(Tp^* \bullet (1 + \rho)) \qquad ... (2)$$

Referring back to Fig. 8, a description will be given about a change in the engine operating point from the state where second MG 120 outputs a negative torque.

At an operating point P1 corresponding to engine target rotation speed NE1, operating point P2 is equivalent to the engine output power. On the other hand, since total torque Tp* is output in the state where the output torque of second MG 120 is set at zero, engine torque Te is lower at operating point P1 than at operating point P2. In this case, engine target rotation speed NE1 is higher than engine target rotation speed NE2.

Referring back to Fig. 6, in steps S210 and S220, engine target rotation speed NE1 during the S/D mode and engine target rotation speed NE2 during the normal running mode are calculated.

In step S230, PM-ECU 170 determines whether the difference (an absolute value) between engine target rotation speeds NE1 and NE2 is smaller than a prescribed threshold value $\alpha$.

Then, when the difference between engine target rotation speeds NE1 and NE2 is smaller than prescribed threshold value $\alpha$ (determined as YES in S230), PM-ECU 170 proceeds the process to step S240, in which a condition is set as follows: engine target rotation speed Ne = NE1. On the other hand, when the difference between engine target rotation speeds NE1 and NE2 is larger than prescribed threshold value $\alpha$ (determined as NO in S230), PM-ECU 170 proceeds the process to step S250, in which a condition is set as follows: engine target rotation speed Ne = NE2.

Furthermore, in step S130, PM-ECU 170 sets a final engine target rotation speed Ne* in the present control cycle based on engine target rotation speed Ne calculated in step S240 or S250 and engine target rotation speed Ne* in the previous control cycle. In this case, rate limit processing is applied for setting an upper limit value for the change amount of engine target rotation speed Ne* during the control cycle.

Consequently, when the S/D mode is applied, the operating point for continuously applying the S/D mode is set in the case where NE = NE2 (S240). On the other hand, in the case where NE = NE1 (S250), the engine operating point is changed so as to shift to the normal running mode.

In contrast, when the normal running mode is applied, the operating point for continuously applying the normal running mode is set in the case where NE = NE1 (S250). On the other hand, in the case where NE = NE2 (S240), the engine operating-point change control for shifting to the S/D mode is started.

Furthermore, in step S250, PM-ECU 170 compares the difference (absolute value) between final engine target rotation speed Ne* set in step S130 and engine target rotation speed NE1 during the S/D mode with a prescribed threshold value $\beta$.

Then, when the difference between engine target rotation speed Ne* and engine target rotation speed NE1 is smaller than prescribed threshold value $\beta$ (determined as YES in S250), PM-ECU 170 turns on an S/D permission flag in step S260. On the other hand, when the difference between engine target rotation speed Ne* and engine target rotation speed NE1 is larger than prescribed threshold value $\beta$ (determined as NO in S250), PM-ECU 170 turns off the S/D permission flag in S260.

Therefore, during the normal running mode, engine operating-point change control is started when engine target rotation speed NE1 obtained during the S/D mode becomes closer to engine target rotation speed NE2 to some extent (determined as YES in S230). Then, when actual engine target rotation speed Ne* becomes sufficiently close to engine target rotation speed NE1 by engine operating-point change control (determined as YES in S240), the S/D permission flag is turned on.

Referring to Fig. 7, subsequent to steps S250 to S270, PM-ECU 170 proceeds the process to step S140. In step S140, PM-ECU 170 determines target values of the torque and the rotation speed of first MG 110 for implementing final engine target rotation speed Ne* determined in step S130.

Fig. 9 is a collinear diagram showing the relation of the rotation speed and the torque among first MG 110, second MG 120 and engine 100 under the running control of the hybrid vehicle according to the present embodiment.

Referring to Fig. 9, a target rotation speed Nmg1* of first MG 110 can be determined according to the following equation (3) by using gear ratio p and drive shaft rotation speed Nr of power split device 130.

$$Nmg1* = (Ne* \bullet (1 + \rho) - Nr)/\rho \qquad ... (3)$$

Then, PM-ECU 170 sets a torque target value Tmg1* of first MG 110 such that first MG 110 rotates at target rotation speed Nmg1*. For example, torque target value Tmg1* can be set according to the following equation (4) so as to sequentially correct torque target value Tmg1* based on the deviation between actual rotation speed Nmg1 and target rotation speed Nmg1* of first MG 110 ($\Delta$Nmg1 = Nmg1* - Nmg1). In addition, the second term on the right-hand side in the equation (4) shows the calculation result of a PID (Proportional Integral Differential) control based on deviation $\Delta$Nmg1.

$$Tmg1* = Tmg1* \text{ (previous value)} + PID (\Delta Nmg1) \qquad ... (4)$$

When first MG 110 is controlled in accordance with torque target value Tmg1*, an engine direct torque Tep (= -Tmg1*/p) is exerted on ring gear 132 (drive shaft 135). Engine direct torque Tep corresponds to the torque transmitted to ring gear 132 at the time when engine 100 is operated at each of target rotation speed Ne* and target torque Te* while first MG 110 receives reaction force.

The output torque of second MG 120 is exerted on ring gear 132 (drive shaft 135). Accordingly, total torque Tp* can be ensured by setting the output torque of second MG 120 so as to compensate for the excessive or insufficient amount of engine direct torque Tep relative to total torque Tp*.

Referring back to Fig. 7, in step S150, PM-ECU 170 calculates engine direct torque Tep based on torque target value Tmg1* set in step S140 and gear ratio p. Also as shown in Fig. 9, engine direct torque Tep can be calculated by the following equation (5).

$$Tep = -Tmg1*/\rho \qquad ... (5)$$

Furthermore, in step S160, PM-ECU 170 calculates a torque target value Tmg2* of second MG 120 according to the following equation (5) so as to compensate for the excessive or insufficient amount of engine direct torque Tep relative to total torque Tp*. When a transmission is connected between second MG 120 and drive shaft 135, the equation (6) only has to be multiplied by the gear ratio.

$$\text{Tmg2*} = (\text{Tp*} - \text{Tep}/\rho) \qquad \text{... (6)}$$

In this way, the output distribution among engine 100, first MG 110 and second MG 120 for outputting total torque Tp* determined in step S100 is determined.

In step S280, PM-ECU 170 determines whether or not torque target value Tmg2* calculated in step S160 is substantially equal to zero. Specifically, in the case where |Tmg2*| < ε, a determination is made as YES in step S280. In other words, a threshold value ε is a value used for detecting Tmg2* ≈ 0 at which no torque step occurs even if the S/D mode is applied to set the output torque of second MG 120 at zero.

In the case where |Tmg2*| < ε (determined as YES in S280), PM-ECU 170 determines in step S290 whether the S/D permission flag is turned on or not. When the S/D permission flag is turned on (determined as YES in S290), PM-ECU 170 proceeds the process to step S300 to perform S/D control for second MG 120. In other words, inverter 220 is shut down and the output torque of second MG 120 becomes zero.

In the S/D mode (first running mode), by setting the engine operating point based on engine target rotation speed NE1, the output distribution is determined such that total torque Tp* is exerted on drive shaft 135 by the output from each of first MG 110 and engine 100, even if the output torque of second MG 120 is set at zero.

On the other hand, in the case where |Tmg2*| > ε (determined as NO in S280) or while the S/D permission flag is off (determined as NO in S290), PM-ECU 170 proceeds the process to step S170. In step S170, second MG 120 is controlled in accordance with torque target value Tmg2* calculated in step S160. In other words, inverter 220 performs DC/AC power conversion by switching control of each switching element.

In the normal running mode (second running mode), based on engine target rotation speed NE2 determined giving priority to engine efficiency, the output distribution is determined such that total torque Tp* is exerted on drive shaft 135 by outputs of first MG 110, second MG 120 and engine 100.

In this way, under the running control of the hybrid vehicle according to the first embodiment, the S/D mode is applied to thereby allow reduction in the power loss in inverter 220 during vehicle running in which the output torque of second MG 120 is set at zero. Consequently, the fuel efficiency of the hybrid vehicle can be improved.

Furthermore, under the engine operating-point change control, variations in the vehicle driving force (torque) at the start of the S/D mode can be suppressed by switching from the normal running mode to the S/D mode after the engine rotation speed is brought close to engine target rotation speed NE1. Particularly, variations in the vehicle driving force can be reliably prevented by inhibiting turning-on of the S/D permission flag until the engine rotation speed becomes close to engine target rotation speed NE1.

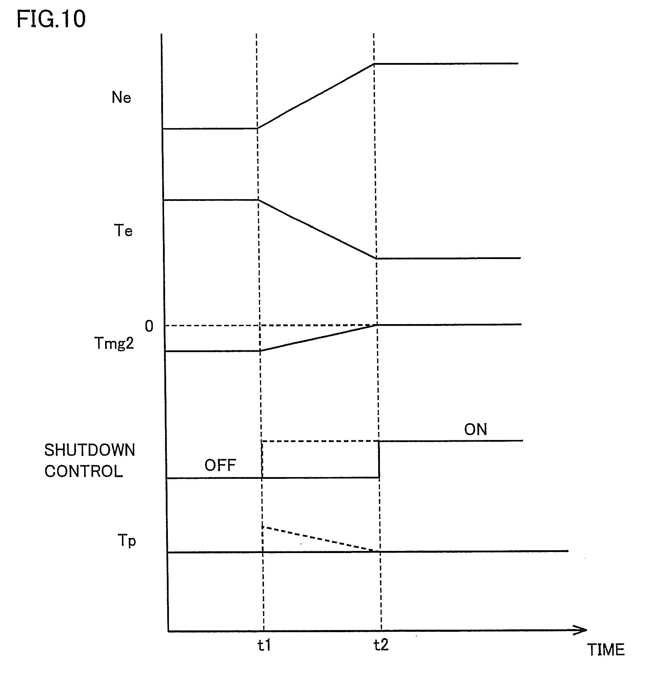

Fig. 10 shows an operation waveform during switching from the normal running mode to the S/D mode under running control of the hybrid vehicle according to the present first embodiment.

Referring to Fig. 10, at time t1, |Tmg2*| < ε is established for the torque target value of second MG 120. However, at this stage, since the engine rotation speed is away from engine target rotation speed NE1, shutdown control is not started.

Then, starting from time t1, engine operating-point change control is performed for changing the engine rotation speed so as to be close to engine target rotation speed NE1. In this case, since Tmg2* < 0 is assumed to be established, the engine operating point is changed such that engine torque Te is decreased.

At and after time t1, engine torque Te gradually decreases as the engine rotation speed is changed so as to be close to engine target rotation speed NE1. The output torque (negative value) of second MG 120 also gradually increases and comes closer to zero.

At time t2, since the engine rotation speed becomes sufficiently close to engine target rotation speed NE1 (determined as YES in S250 in Fig. 6), the S/D permission flag is turned on and shutdown control is started. This leads to Tmg2* = 0.

At this point of time, by engine operating-point change control at times t1 to t2, the engine operating point is set, at which total torque Tp* can be exerted on drive shaft 135 by the output of engine 100, even if the output torque of second MG 120 is set at zero. Accordingly, even when shutdown control is started at time t2, variations in total torque (vehicle driving force) Tp exerted on drive shaft 135 can be suppressed.

On the other hand, in Fig. 10, the behavior at the time when shutdown control is performed at time t1 is shown by dotted lines.

At time t1, when shutdown control is started, the output torque of second MG 120 immediately becomes zero by setting torque target value Tmg2* of second MG 120 at zero. However, since engine 100 has great inertia, engine rotation speed Ne and engine torque Te change gradually. Consequently, total torque Tp exerted on drive shaft 135 is changed corresponding to the torque change in second MG 120. It is thus understood that total torque Tp* continuously changes until the engine rotation speed is changed to be engine target rotation speed NE1.

In other words, under the running control of the hybrid vehicle according to the present first embodiment, variations in the vehicle driving force can be suppressed by performing engine operating-point change control when applying the S/D mode for improving the fuel efficiency.

(Second Embodiment)

In the second embodiment, the running control for correctly setting the vehicle driving force in the S/D mode will be further described. In the subsequent embodiments including the second embodiment, several controlling processes are further performed in addition to the running control according to the first embodiment. Accordingly, in the following embodiments, the controlling process added to or modified from the first embodiment will be mainly described, but any common parts with the first embodiment will not be basically repeated.

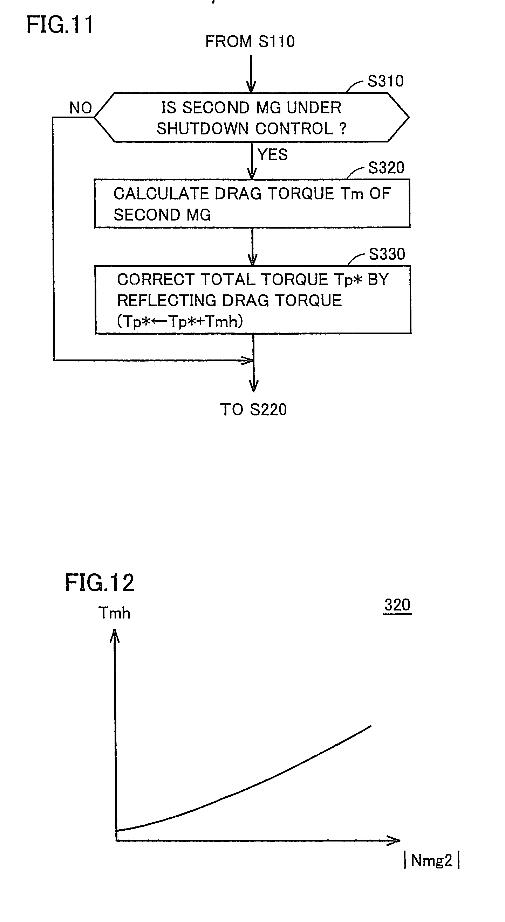

Fig. 11 is a flowchart illustrating a controlling process added by the running control of the hybrid vehicle according to the present second embodiment.

Referring to Fig. 11, under the running control according to the second embodiment, PM-ECU 170 further performs a process of steps S310 to S330 between steps S110 and S220 in Fig. 6.

In step S310, PM-ECU 170 determines whether second MG 120 is under the shutdown control or not. When second MG 120 is under the shutdown control (determined as YES in S310), PM-ECU 170 calculates a drag torque Tm of second MG 120 in step S320.

Drag torque Tm shows a magnitude of a torque acting as rotational resistance when second MG 120 rotates at an output torque = 0. During execution of the torque control of second MG 120, the output torque can be feedback-controlled so as to compensate for the amount of the drag torque. In contrast, in the S/D mode, since the torque control of second MG 120 is stopped and the output torque becomes zero, the torque (vehicle driving force) exerted on drive shaft 135 may decrease in accordance with the amount of the drag torque of second MG 120.

Typically, the mechanical loss to rotational movement caused by a bearing and the like is exerted as rotational resistance. The torque caused by such mechanical loss changes depending on the rotation speed of second MG 120.

Therefore, as shown in Fig. 12, if the corresponding relation of drag torque Tmh to second MG rotation speed Nmg2 (absolute value) is measured in advance by experiments or the like, a map 320 based on the experimental results can be produced in advance. In addition, when a transmission is disposed between second MG 120 and drive shaft 135, the converted value to the drive shaft torque in consideration of the gear ratio of the transmission is assumed to be a map value of drag torque Tmh.

In step S320 in Fig. 11, drag torque Tm (Tm = Tmh) can be calculated by referring to map 320 based on second MG rotation speed Nmg2 in the present control cycle.

Referring back to Fig. 11, in step S330, PM-ECU 170 corrects total torque Tp* calculated in step S100 by reflecting drag torque Tm. In other words, the sum of total torque Tp* calculated in step S100 and drag torque Tm is newly set as total torque Tp*. Then, in the subsequent control cycle, in step S220 (Fig. 6), engine target rotation speed NE1 (that is, engine operating point) in the S/D mode is determined based on total torque Tp* in which drag torque Tm is included.

Therefore, the difference resulting from the influence of the drag torque between the vehicle driving force in the S/D mode and the requested total torque Tp* can be suppressed.

(First Modification of Second Embodiment)

When second MG 120 is a permanent magnet motor, counter-electromotive force is generated by a permanent magnet attached to a rotor. Accordingly, in the S/D mode, an electromagnetic drag torque resulting from this counter-electromotive force is generated. Such an electromagnetic drag torque is reflected in the total torque in the first modification of the second embodiment.

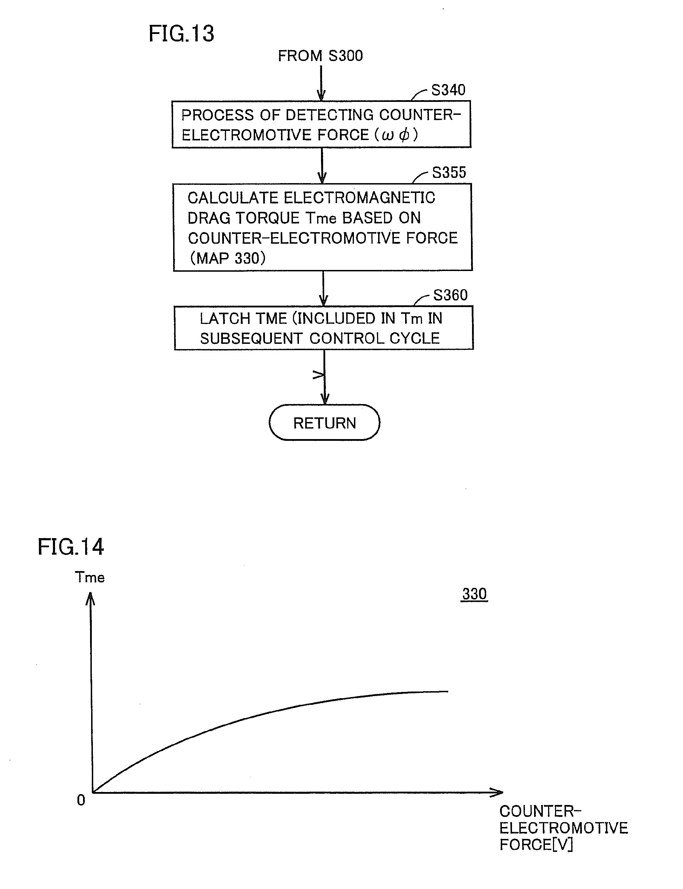

Fig. 13 is a flowchart illustrating a controlling process added by the running control according to the first modification of the second embodiment of the present invention.

Referring to Fig. 13, PM-ECU 170 performs a process of steps S340 to S360 after execution of step S300.

PM-ECU 170 performs a process of detecting counter-electromotive force in step S340. Then, in step S350, PM-ECU 170 calculates electromagnetic drag torque Tme based on the detected counter-electromotive force.

As shown in Fig. 14, if the corresponding relation of electromagnetic drag torque Tme to the counter-electromotive force is measured in advance by experiments and the like, a map 330 based on the experimental results can be produced in advance. In addition, when a transmission is disposed between second MG 120 and drive shaft 135, the converted value to the drive shaft torque in consideration of the gear ratio of the transmission is set as a map value of drag torque Tme.

In step S350 in Fig. 13, drag torque Tme can be calculated by referring to map 330 based on the counter-electromotive force detected in step S340.

In step S360, PM-ECU 170 latches drag torque Tme calculated in step S320. The drag torque latched in step S360 is included in drag torque Tm in step S320 (Fig. 11) in the subsequent (next) control cycle. Consequently, it becomes possible to compensate for the electromagnetic drag torque exerted on a permanent magnet motor and output the requested total torque *Tp.

Then, a specific example of the process of detecting counter-electromotive force in step S340 will be described.

As the first detection example, the counter-electromotive force can be detected from the measured value of a line voltage by measuring a two-phase voltage of a three-phase alternating current in second MG 120. It is to be noted that a voltage sensor needs to be disposed in this detection example.

As the second detection example, the counter-electromotive force can also be detected based on the control data under a specified condition for torque control of second MG 120, without additionally disposing a voltage sensor.

The following equations (7) and (8) each are known as a d-q axis voltage equation used for electric motor control.

$$Vd = R \bullet Id - \omega \bullet Lq \bullet Iq \qquad \ldots (7)$$

$$Vq = \omega \bullet Ld \bullet Id + R \bullet Iq + \omega \bullet \varphi \qquad \ldots (8)$$

In the equations (7) and (8), Vd and Vq are a d-axis component and a q-axis component, respectively, of the voltage applied to second MG 120, while Id and Iq are a d-axis component and a q-axis component, respectively, of the voltage applied to second MG 120. A three-phase voltage and a three-phase current can be mutually converted and inverse-converted from/to Vd, Vq and Id, Iq, respectively, on the d-q axis according to a prescribed conversion matrix. Furthermore, Ld and Lq are a d-axis component and a q-axis component, respectively, of an inductance, and R is a resistance component. Furthermore, $\omega$ is an electrical angle speed, and $\varphi$ is an interlinkage flux. The product of $\omega \bullet \varphi$ corresponds to the counter-electromotive force of second MG 120.

In a high speed rotation region where $\omega$ becomes relatively large, since resistance R become negligible as compared with $\omega$L, the equations (7) and (8) are transformed into the following equations (9) and (10), respectively.

$$Vd = -\omega \bullet Lq \bullet Iq \qquad \ldots (9)$$

$$Vq = \omega \bullet Ld \bullet Id + \omega \bullet \varphi \qquad \ldots (10)$$

In the second detection example, the counter electromotive voltage is detected from the command value of a q-axis voltage Vq obtained when second MG 120 is subjected to zero-current control.

Id and Iq command values are set at zero by zero-current control. Then, by feedback-controlling Id and Iq each converted from a three-phase current, Vd and Vq voltage command values for establishing Id = Iq = 0 (current command value) are calculated.

When Id = Iq = 0 is substituted into the equations (9) and (10), a condition is given as follows: Vd = 0 and Vq = $\omega \bullet \varphi$. In other words, the Vq command value during zero-current control corresponds to a counter electromotive voltage.

For example, when normal feedback control using a current command value set as Id = Iq = 0 is performed for an extremely short period of time before shutting down inverter 220, a Vq command value during zero-current control can be calculated.

In addition, an output torque Trq of the permanent magnet motor is as shown in the following equation (11) using a pole logarithm p.

$$Trq = p \bullet (\varphi \bullet Iq + (Ld - Lq) \bullet Id \bullet Iq) \qquad \ldots (11)$$

In other words, during zero-current control (Id = Iq = 0), the output torque of second MG 120 is controlled to be zero. Therefore, even if zero-current control is performed for a short period of time before starting shutdown control, the torque does not significantly vary when inverter 220 is shut down.

In this way, in the first control cycle in which shutdown control is started, zero-current control is performed in a limited extremely short period of time, thereby allowing detection of a counter electromotive voltage used for calculating drag torque Tme. However, since zero-current control cannot be performed during shutdown of inverter 220, the process of steps S340 to S360 is performed only at the start of shutdown control (the first control cycle). In other words, in the subsequent control cycles in which shutdown control is continuously performed, drag torque Tme latched in the first control cycle (S330) is included in common in drag torque Tm in step S352 (Fig. 11).

In the third detection example, as in the second detection example, a counter-electromotive force is detected without additionally disposing a voltage sensor. Zero-current control described in the second detection example cannot be performed in the region where a counter electromotive voltage ($\omega \cdot \varphi$) becomes large due to high speed rotation. This is because when the counter electromotive voltage is higher than Vq based on zero-current control, Id = Iq = 0 cannot be achieved by control. Specifically, zero-current control cannot be applied when the modulation factor (($Vd^2 + Vq^2)^{1/2}$/VH) by inverter 220 is 0.78 or more.

In the third detection example, in place of zero-current control, a counter electromotive voltage is detected from the current detection value obtained when second MG 120 is subjected to zero-voltage control (Vd = Vq = 0).

When Vq = 0 is substituted into the equation (10), a condition is given as follows: $\omega \cdot \varphi = -\omega \cdot Ld \cdot Id$. Id can be calculated from the three-phase current detection value of second MG 120. Furthermore, electrical angle speed $\omega$ can also be calculated from the rotation angle detection value of second MG 120. The three-phase current and the rotation angle each are a detection value used in the normal current feedback control. Furthermore, inductance Ld is a motor constant, and even when saturation during high speed rotation is taken into consideration, a map based on the experimental results and the like can be produced in advance as a function of current Id.

The second and third detection examples can be selectively performed in the first control cycle in which shutdown control is started.

Therefore, as in the second detection example, in the first control cycle in which shutdown control is performed, zero-voltage control is performed in a limited extremely short period of time, thereby allowing detection of the counter electromotive voltage used for calculating drag torque Tme. Then, in the subsequent control cycles in which shutdown control is continuously performed, drag torque Tme latched in the first control cycle (S330) can be included in common in drag torque Tm in step S320 (Fig. 11).

In this way, according to the first modification of the second embodiment, the electromagnetic drag torque resulting from counter-electromotive force can be calculated by any of the first to third detection examples. Therefore, drag torque Tm in step S320 in Fig. 6 can be calculated based on mechanical drag torque Tmh and/or electromagnetic drag torque Tme.

By reflecting drag torque Tm in the setting of the engine operating point (engine target rotation speed NE1) in the S/D mode, the difference between the vehicle driving force in the S/D mode and the requested total torque Tp* can be suppressed.

(Second Modification of Second Embodiment)

In the second modification of the second embodiment, a description will be given about the controlling process of compensating for the torque deviation in engine 100 at the start of the S/D mode.

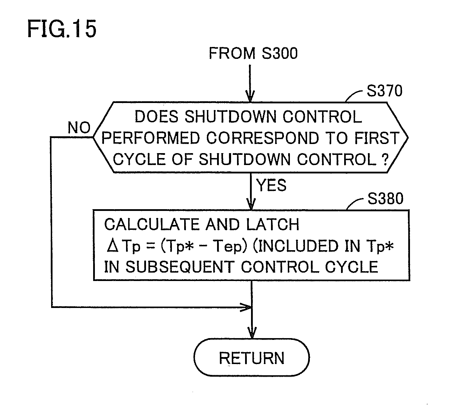

Fig. 15 is a flowchart illustrating a controlling process added by the running control of the hybrid vehicle according to the second modification of the present second embodiment.

Referring to Fig. 15, when performing shutdown control of second MG 120, PM-ECU 170 further performs steps S370 and S380, subsequent to step S300.

In step S370, PM-ECU 170 determines whether the shutdown control being performed is the first cycle of shutdown control or not. When it is determined as the first cycle of shutdown control (determined as YES in S370), in step S380, PM-ECU 130 calculates a torque deviation $\Delta$Tp between total torque Tp* calculated in step S100 and engine direct torque Tep calculated in step S150 ($\Delta$Tp = Tp* - Tep).

Accordingly, torque deviation $\Delta$Tp is equivalent to an excessive or insufficient amount of engine direct torque Tep ensured at the start of shutdown control, relative to total torque Tp* calculated in step S100. As described above, engine direct torque Tep is calculated from torque target value (Tmg1*) of first MG 110 used for controlling the engine rotation speed to be equal to engine target rotation speed Ne*. Therefore, torque loss and the like caused by friction loss are included in torque deviation $\Delta$Tp at the start of shutdown control.

Therefore, during the S/D mode, torque deviation $\Delta$Tp calculated at the start of shutdown control is latched. Then, in the subsequent control cycles, it is preferable to include torque deviation $\Delta$Tp in total torque Tp* as in the case of drag torque Tm.

In this way, in the subsequent control cycles, it becomes possible to determine engine target rotation speed NE1 (that is, the engine operating point) in the S/D mode by adding torque deviation $\Delta$Tp so as to compensate for torque loss and the like in engine 100 (S220 in Fig. 6).

Consequently, it becomes possible to suppress the difference resulting from torque loss and the like in engine 100 between the vehicle driving force in the S/D mode and the requested total torque Tp*.

In addition, by setting total torque Tp* to include both of drag torque Tm described in the second embodiment and its first modification and torque deviation $\Delta$Tp described in the second modification of the second embodiment, engine target rotation speed NE1 (engine operating point) in the S/D mode can also be determined. By doing this, it can be expected that the difference between the vehicle driving force in the S/D mode and the requested total torque Tp* is suppressed.

(Third Embodiment)

Under the running control described in the first embodiment, engine operating-point change control is performed for applying shutdown control. As a result, in the S/D mode, the engine operating point is deviated from operation line 300 (Fig. 8) that is set based on the optimal fuel efficiency. Therefore, when shutdown control is applied, reduction in power loss in inverter 220 causes improvement in fuel efficiency whereas a change in the engine operating point causes deterioration in fuel efficiency.

Under the running control of the hybrid vehicle according to the third embodiment, it is determined whether the engine operating point can be changed or not, based on the prediction about a fuel efficiency improving effect during the S/D mode.

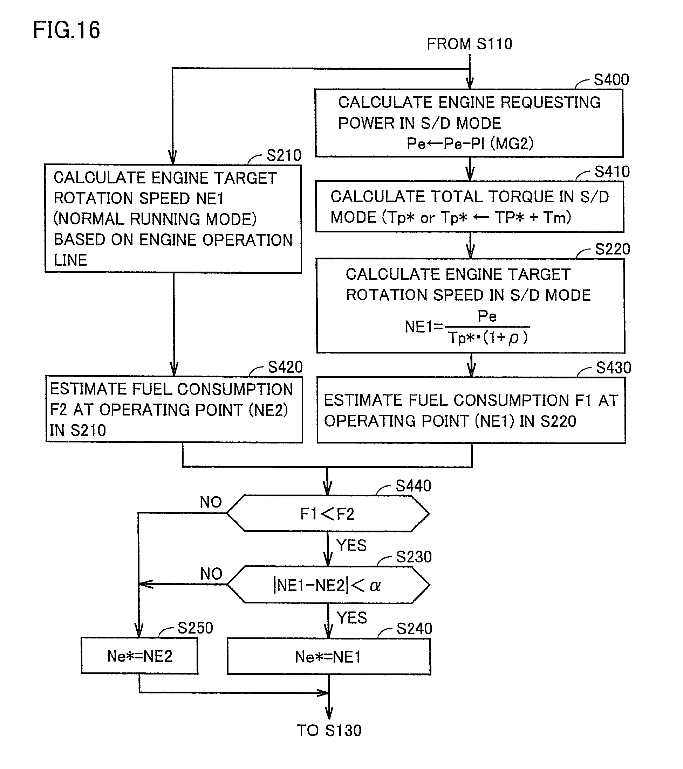

Fig. 16 is a flowchart illustrating a controlling process added by the running control of the hybrid vehicle according to the present third embodiment.

Referring to Fig. 16, under the running control of the hybrid vehicle according to the third embodiment, PM-ECU 170 further performs steps S400 and S410 between the process of steps S110 and S220.

In step S400, PM-ECU 170 reflects loss reduction power Pl (Pl > 0) for driving of second MG 120 resulting from shutdown of inverter 220 in engine requesting power Pe at the time when the S/D mode is applied. In other words, by subtracting loss reduction power Pl from engine requesting power Pe calculated in step S 110 (Fig. 6), engine requesting power Pe in the S/D mode is calculated. Loss reduction power Pl can be set in advance based on the experimental results and the like.

PM-ECU 170 calculates total torque Tp* in the S/D mode in step S410. As total torque Tp* in the S/D mode, basically, total torque Tp* calculated in step S100 can be used without change.

Furthermore, in step S220, based on engine requesting power Pe calculated in step S400 and total torque Tp* calculated in step S410, PM-ECU 170 calculates engine target rotation speed NE1 in the S/D mode, as has been described with reference to Fig. 6. Therefore, it is understood that a loss reducing effect by shutdown of inverter 220 is incorporated in engine target rotation speed NE1 due to step S400.

Furthermore, in step S430, PM-ECU 170 estimates a fuel consumption F1 at the engine operating point determined in step S220.

On the other hand, PM-ECU 170 calculates engine target rotation speed NE2 (engine operating point) in the normal running mode in step S210 similar to that in Fig. 6, and then, further performs step S420. In step S420, PM-ECU 170 estimates a fuel consumption F2 at the engine operating point determined in step S210.

As to the fuel consumption at each operating point of engine 100, a map can be produced in advance by measuring each fuel consumption in experiments and the like. Therefore, in steps S420 and S430, fuel consumptions F1 and F2 can be estimated by referring to the map based on each engine operating point determined in steps S210 and S220.

In step S440, PM-ECU 170 determines whether fuel consumption F1 during the S/D mode is smaller than fuel consumption F2 during the normal running mode. In the case where F1 < F2, a determination is made as YES in step S440.

When determined as NO in step S440, it cannot be expected to improve fuel efficiency by applying the S/D mode. Accordingly, PM-ECU 170 skips step S230 and proceeds the process to step S250. In step S250, engine target rotation speed NE2 in the normal running mode is assumed to be equal to engine target rotation speed Ne*. In other words, the operating-point change control for applying the S/D mode is inhibited.

On the other hand, when determined as YES in step S440, it can be expected to improve fuel efficiency by applying the S/D mode. Accordingly, PM-ECU 170 does not inhibit the engine operating-point change control. Therefore, by the process of steps S230 to S250 described with reference to Fig. 6, it is determined based on the difference between engine target rotation speeds NE1 and NE2 whether the operating-point change control can be started or not, as in the first embodiment.

Thus, according to the running control of the hybrid vehicle in the third embodiment, by estimating the fuel consumption after changing the engine operating point for applying the S/D mode, it can be determined whether the effect of improving fuel efficiency by shutdown of inverter 220 can be achieved or not. Consequently, since deterioration in fuel efficiency due to application of the S/D mode can be prevented, shutdown control can be efficiently performed.

(Fourth Embodiment)

In the fourth embodiment, charge/discharge control of battery 150 related to application of the S/D mode will then be described.

When the operation of inverter 220 is stopped, second MG 120 is brought into a power generation state at a high rotation speed. When second MG 120 is brought into a power generation state, a current flows from second MG 120 into inverter 220. This current is rectified by the antiparallel diode (Fig. 2) in inverter 220 in which its switching operation is stopped, and then, battery 150 is charged. In this case, it is necessary to pay attention to prevent battery 150 from being overcharged.

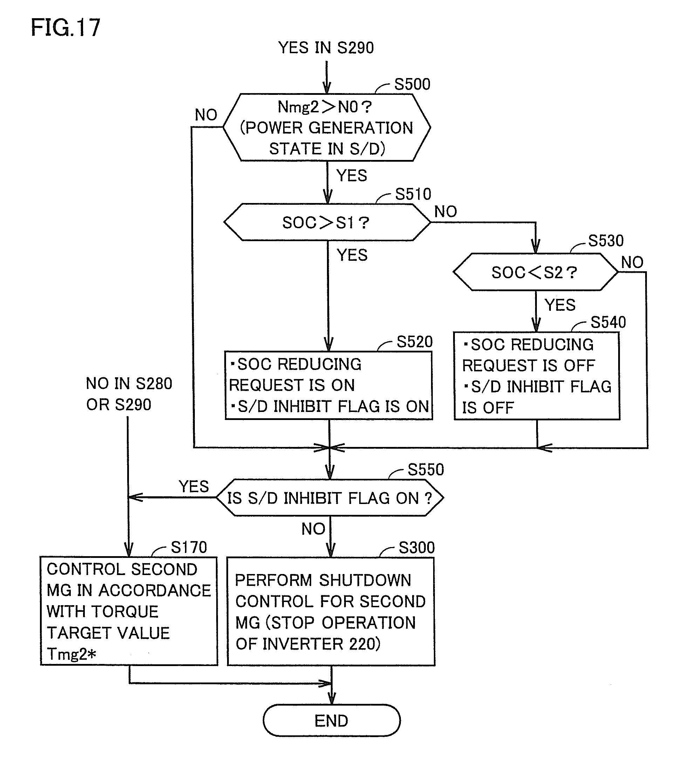

Fig. 17 is a flowchart for illustrating a controlling process added by the running control of the hybrid vehicle according to the present fourth embodiment.

Referring to Fig. 17, when a determination is made as YES in step S290 and the S/D mode is applied, PM-ECU 170 further performs the process of steps S500 to S550 described below.

PM-ECU 170 determines in step S500 whether rotation speed Nmg2 of second MG 120 is higher than a reference rotation speed N0. Reference rotation speed N0 is determined from characteristics of second MG 120. In the case where Nmg2 > N0, second MG 120 is brought into a power generation state, and a current flows from second MG 120 into inverter 220.

At a high rotation speed in which Nmg2 > N0 (determined as YES in S500), PM-ECU 170 proceeds the process to step S510 and determines whether the SOC of battery 150 is higher than a reference value S1. For example, reference value S1 is set in advance at a value that is obtained by subtracting a margin value from the upper limit value of the SOC control range.

Then, in the case where SOC > S1 (determined as YES in S510), PM-ECU 170 proceeds the process to step S520, and turns on an S/D inhibit flag for inhibiting switching to shutdown control. Furthermore, in step S520, an SOC reducing request for reducing the SOC of battery 150 is turned on.

On the other hand, in the case where SOC < S1 (determined as NO in S510), PM-ECU 170 determines in step S530 whether the SOC is lower than a reference value S2. Reference value S2 is lower than at least reference value S1. Reference value S2 is set in advance at the SOC level at which a charge current caused by shutdown control is acceptable.

In the case where SOC < S2 (determined as YES in S530), PM-ECU 170 proceeds the process to step S540, and then, turns off the S/D inhibit flag and sets the SOC reducing request to be off. On the other hand, while SOC > S2 (determined as NO in S530), the process of S540 is skipped.

PM-ECU 170 determines in step S550 whether the S/D inhibit flag is turned on or not. When the S/D inhibit flag is turned on (determined as YES in S550), PM-ECU 170 proceeds the process to step S170, and therefore, shutdown control is not performed. In other words, the normal running mode is applied.

When the SOC reducing request is set to be on, the output distribution is controlled such that the output of second MG 120 is increased while the output of engine 100 is decreased. For example, the above-described output distribution can be implemented by setting Pchg in the equation (1) at a negative value when calculating engine requesting power Pe in step S110 (Fig. 6). Consequently, the electric power of battery 150 is consumed by second MG 120, so that the SOC can be reduced. Then, when the SOC is reduced below reference value S2 in response to the SOC reducing request, the S/D inhibit flag is turned off, with the result that it becomes possible to apply the S/D mode.

When the SOC is increased during shutdown control and becomes greater than reference value S1, the S/D inhibit flag is turned on, and thereby, the shutdown control is stopped. Consequently, battery 150 can be prevented from being overcharged. Furthermore, by setting the SOC reducing request to be on, the SOC can be reduced such that shutdown control can be resumed.

In this way, according to the running control of the hybrid vehicle in the fourth embodiment, in the case where second MG 120 is brought into a power generation state when the S/D mode is applied, the shutdown control can be prevented from being started when the SOC is relatively high. Therefore, it becomes possible to prevent battery 150 from being overcharged and to apply shutdown control for second MG 120.

Furthermore, when the SOC is relatively high, the output distribution is controlled to reduce the SOC, so that the opportunity of applying shutdown control can be ensured.

As has been confirmatively described in the first to fourth embodiments and modifications thereof, in the driveline of the hybrid vehicle, running control of the hybrid vehicle according to the present embodiment can be applied also to the configuration different from that of the hybrid vehicle illustrated in Fig. 1. Specifically, including a parallel-type hybrid vehicle, the present invention can be applied to any configuration as long as the driving force (torque of the drive shaft) for the entire vehicle is generated by the sum of the direct torque mechanically transmitted from the engine to the drive shaft and the output torque of the electric motor. In other words, irrespective of the number of electric motors (motor generators) to be disposed and the configuration of the power transmission device, running control according to the first to fourth embodiments and modifications thereof can be applied so as to implement shutdown of a power converter (stop switching) for driving the electric motor whose output torque is set at zero.

It should be understood that the embodiments disclosed herein are illustrative and non-restrictive in every respect. The scope of the present invention is defined by the terms of the claims, rather than the description above, and is intended to include any modifications within the scope and meaning equivalent to the terms of the claims.

INDUSTRIAL APPLICABILITY

The present invention can be applied to a hybrid vehicle including an engine and a traction motor each as a driving force source.

REFERENCE SIGNS LIST

100 engine, 102 crankshaft, 112, 122 neutral point, 130 power split device, 131 sun gear, 132 ring gear, 133 pinion gear, 134 carrier, 135 ring gear shaft (drive shaft), 140 reduction gear, 150 battery, 152 battery sensor, 160 driving wheel, 180 voltage sensor, 200 converter, 210, 210 inverter, 300 operation line, 310 equal-power line, 320, 330 map (drag torque), Acc accelerator pedal position, F1, F2 fuel consumption estimate value, GL ground line, N0 reference rotation speed (second MG power generation state), NE1 engine target rotation speed (S/D mode), NE2 engine target rotation speed (normal running mode), Ne engine rotation speed, Ne* engine target rotation speed, Nmg1* target rotation speed (first MG), Nmg1 first MG rotation speed, Nmg2 second MG rotation speed, Nr drive shaft rotation speed, P1, P2 engine operating point, PL power line, Pchg charge/discharge request power, Pe engine requesting power, P1 loss reduction power (S/D mode), S1, S2 reference value (SOC), Te engine torque, Tep engine direct torque, Tm, Tme, Tmh drag torque, Tmg1 torque target value (first MG), Tp* total torque (requested driving force), V vehicle speed.

**Claims**

1. A hybrid vehicle comprising:

    an internal combustion engine (100);
    an electric motor (120) configured to output a torque to a drive shaft (135) mechanically coupled to a driving wheel (160);
    a power transmission device (130) for mechanically transmitting a torque originating from an output of said internal combustion engine to said drive shaft;
    a first power converter (220) for controlling an output torque of said electric motor; and
    a control device (170, 172) for controlling the output of each of said internal combustion engine and said electric motor such that requested driving force for an entire vehicle is exerted on said drive shaft,
    said control device including

    a running control unit (170) for selectively applying a first running mode in which said requested driving force is exerted on said drive shaft by the output of said internal combustion engine in a state where the output torque of said electric motor is set at zero, and a second running mode in which said requested driving force is exerted on said drive shaft by the output of each of said internal combustion engine and said electric motor, and
    an electric motor control unit (172) for stopping an operation of said first power converter in said first running mode.

2. The hybrid vehicle according to claim 1, wherein, during said second running mode, said running control unit (170) calculates a first target rotation speed (NE1) of said internal combustion engine for ensuring said requested driving force in a case where the output torque of said electric motor is set at zero, controls the output of each of said internal combustion engine and said electric motor so as to perform operating-point change control for bringing a rotation speed of said internal combustion engine close to said first target rotation speed, and performs switching from said second running mode to said first running mode when an absolute value of the output torque of said electric motor becomes smaller than a prescribed threshold value.

3. The hybrid vehicle according to claim 2, wherein, during said second running mode, said running control unit (170) performs said operating-point change control when a difference between a second target rotation speed (NE2) of said internal combustion engine for ensuring said requested driving force in accordance with said second running mode and said first target rotation speed is smaller than a prescribed threshold value ($\alpha$).

**4.** The hybrid vehicle according to claim 2, wherein, during said second running mode, said running control unit (170) performs said operating-point change control when an estimate value (F1) of a fuel consumption in a case where said internal combustion engine operates in accordance with said first running mode in a state where the operation of said first power converter (220) is stopped is smaller than an estimate value (F2) of a fuel consumption in a case where said internal combustion engine operates in accordance with said second running mode.

**5.** The hybrid vehicle according to claim 1, wherein, during said first running mode, said running control unit (170) estimates a magnitude of a drag torque (Tm) acting as rotational resistance when said electric motor rotates at zero torque, and controls the output of said internal combustion engine such that a sum of said requested driving force and the estimated drag torque is exerted on said drive shaft.

**6.** The hybrid vehicle according to claim 5, wherein said running control unit (170) estimates said drag torque based on a rotation speed (Nmg2) of said electric motor.

**7.** The hybrid vehicle according to claim 5, wherein said running control unit (170) estimates said drag torque based on counter-electromotive force ($\omega \cdot \varphi$) generated in said electric motor.

**8.** The hybrid vehicle according to any one of claims 1 to 7, further comprising a power generator (110) for generating electric power by motive power from said internal combustion engine, wherein
said power transmission device includes a three-shaft type power split device (130), and
said power split device is mechanically coupled to three shafts including an output shaft (102) of said internal combustion engine (100), an output shaft of said power generator (110) and said drive shaft (135); and configured such that when rotation speeds of any two shafts of said three shafts are determined, a rotation speed of remaining one shaft is determined, and configured to, based on the motive power input to and output from any two shafts of said three shafts, input and output the motive power to and from remaining one shaft.

**9.** The hybrid vehicle according to claim 8, wherein
said first power converter (220) performs bidirectional power conversion between a power line (PL) and said electric motor (120),
said hybrid vehicle further comprises:

a second power converter (210) for performing bidirectional power conversion between said power line and said power generator (110); and
a power storage device (150) electrically connected to said power line, and

during said second running mode, said running control unit (170) inhibits switching from said second running mode to said first running mode when an SOC of said power storage device is higher than a prescribed first threshold value (S1) in a case where the rotation speed (Nmg2) of said electric motor falls within a region in which electric power is generated during rotation at zero torque.

**10.** The hybrid vehicle according to claim 9, wherein, during said first running mode, said running control unit (170) forcibly performs switching from said first running mode to said second running mode when the SOC of said power storage device is increased above said first threshold value (S1).

**11.** The hybrid vehicle according to claim 9 or 10, wherein, during said second running mode, said running control unit (170) controls the output of each of said internal combustion engine (100), said electric motor (120) and said power generator (100) so as to generate said requested driving force while causing discharge of said power storage device, when the SOC of said power storage device (150) is lower than said first threshold value (S1) and higher than a prescribed second threshold value (S2) that is lower than said first threshold value.

**12.** A method of controlling a hybrid vehicle equipped with an internal combustion engine (100), an electric motor (120) configured to output a torque to a drive shaft (135) mechanically coupled to a driving wheel (160), and a power transmission device (130) for mechanically transmitting a torque originating from an output of said internal combustion engine to said drive shaft, said controlling method comprising the steps of:

calculating requested driving force for an entire vehicle based on a vehicle state (S100);
selecting a first running mode in which said requested driving force is exerted on said drive shaft by the output of each of said internal combustion engine and said electric motor in a state where an output torque of said electric motor is set at zero and a second running mode in which said requested driving force is exerted on said drive shaft by the output of each of said internal combustion engine and said electric motor (S280, S290); and stopping an operation of a power converter (220) for controlling the output torque of said electric motor in said first running mode (S300).

13. The method of controlling a hybrid vehicle according to claim 12, further comprising the steps of:

calculating a first target rotation speed (NE1) of said internal combustion engine for ensuring said requested driving force when the output torque of said electric motor is set at zero during said second running mode (S220); and
performing operating-point change control for bringing a rotation speed of said internal combustion engine close to said first target rotation speed during said second running mode (S130), wherein
said step of selecting (S280) selects said first running mode when an absolute value of the output torque of said second electric motor becomes smaller than a prescribed threshold value during said second running mode.

14. The method of controlling a hybrid vehicle according to claim 13, further comprising the steps of:

calculating a second target rotation speed (NE2) of said internal combustion engine for ensuring said requested driving force in accordance with said second running mode (S210); and
performing said operating-point change control when a difference between said first target rotation speed and said second target rotation speed is smaller than a prescribed threshold value ($\alpha$) (S230, S240).

15. The method of controlling a hybrid vehicle according to claim 12, further comprising the steps of:

estimating a magnitude of a drag torque (Tm) acting as rotational resistance when said second electric motor rotates at zero torque during said first running mode (S352, S375); and
incorporating said drag torque into said requested driving force during said first running mode (S355, S380).

## FIG.1

FIG.2

EP 2 660 116 A1

**FIG.3**

FIRST MG
ROTATION
SPEED

ENGINE
ROTATION
SPEED

SECOND MG
(DRIVE SHAFT)
ROTATION SPEED

0

SUN GEAR    CARRIER    RING GEAR

**FIG.4**

FIRST MG
ROTATION
SPEED

ENGINE
ROTATION
SPEED

SECOND MG
(DRIVE SHAFT)
ROTATION SPEED

0

SUN GEAR    CARRIER    RING GEAR

**FIG.5**

FIRST MG
ROTATION
SPEED

ENGINE
ROTATION
SPEED

SECOND MG
(DRIVE SHAFT)
ROTATION SPEED

0

SUN GEAR    CARRIER    RING GEAR

## FIG.6

START

↓

**S100**
CALCULATE TOTAL TORQUE (Tp*) REQUESTED BASED ON VEHICLE STATE (ACC, V)

↓

**S110**
CALCULATE ENGINE REQUESTING POWER (Pe) FROM Tp*

**S200**

**S210**
CALCULATE ENGINE TARGET ROTATION SPEED NE2 (NORMAL RUNNING MODE) BASED ON ENGINE OPERATION LINE

**S220**
CALCULATE ENGINE TARGET ROTATION SPEED NE1 (S/D MODE) FOR COVERING TOTAL TORQUE ENTIRELY BY ENGINE

$$NE1 = \frac{Pe}{Tp* \cdot (1+\rho)}$$

**S230**
$|NE1-NE2| < \alpha$ ?

NO →

YES ↓

**S250**
Ne=NE2

**S240**
Ne=NE1

↓

**S130**
SET ENGINE TARGET ROTATION SPEED Ne* AFTER RATE LIMIT PROCESSING

↓

**S250**
$|Ne*-NE1| < \beta$ ?

NO →

YES ↓

**S260**
S/D PERMISSION FLAG = ON

**S270**
S/D PERMISSION FLAG = OFF

↓

A

## FIG.7

(A)

┌─ S140

DETERMINE TARGET VALUES (Tmg1*, Nmg1*) OF TORQUE
AND ROTATION SPEED OF FIRST MG FOR IMPLEMENTING
ENGINE TARGET ROTATION SPEED Ne*

┌─ S150

CALCULATE ENGINE DIRECT TORQUE $Tep = -Tmg1*/\rho$

┌─ S160

CALCULATE TORQUE TARGET VALUE Tmg2* of SECOND
MG BASED ON EXCESSIVE OR INSUFFICIENT AMOUNT OF
Tep RELATIVE TO Tp*

┌─ S280

$|Tmg2*| < \varepsilon$ ?   NO

YES

┌─ S290

IS S/D PERMISSION FLAG ON?   NO

YES

┌─ S300

PERFORM SHUTDOWN CONTROL
FOR SECOND MG (STOP
OPERATION OF INVERTER 220)

┌─ S170

CONTROL SECOND MG
IN ACCORDANCE WITH
TORQUE TARGET VALUE
Tmg2*

END

FIG.8

FIG.9

24

FIG.10

## FIG.11

FROM S110

S310

NO — IS SECOND MG UNDER SHUTDOWN CONTROL ?

YES

S320

CALCULATE DRAG TORQUE Tm OF SECOND MG

S330

CORRECT TOTAL TORQUE Tp* BY REFLECTING DRAG TORQUE (Tp*←Tp*+Tmh)

TO S220

## FIG.12

320

Tmh

|Nmg2|

# FIG.13

FROM S300

PROCESS OF DETECTING COUNTER-
ELECTROMOTIVE FORCE ($\omega\phi$) — S340

CALCULATE ELECTROMAGNETIC
DRAG TORQUE Tme BASED ON
COUNTER-ELECTROMOTIVE FORCE
(MAP 330) — S355

LATCH TME (INCLUDED IN Tm IN
SUBSEQUENT CONTROL CYCLE — S360

RETURN

# FIG.14

Tme

330

0

COUNTER-
ELECTROMOTIVE
FORCE[V]

FIG.15

FROM S300

S370

DOES SHUTDOWN CONTROL PERFORMED CORRESPOND TO FIRST CYCLE OF SHUTDOWN CONTROL ?

NO

YES

S380

CALCULATE AND LATCH
$\Delta$Tp = (Tp* − Tep) (INCLUDED IN Tp*
IN SUBSEQUENT CONTROL CYCLE

RETURN

# FIG.16

FROM S110

**S400**
CALCULATE ENGINE REQUESTING
POWER IN S/D MODE
Pe←Pe-Pl (MG2)

**S210**
CALCULATE ENGINE TARGET
ROTATION SPEED NE1
(NORMAL RUNNING MODE)
BASED ON ENGINE OPERATION
LINE

**S410**
CALCULATE TOTAL TORQUE IN S/D
MODE (Tp* or Tp* ← TP* + Tm)

**S220**
CALCULATE ENGINE TARGET
ROTATION SPEED IN S/D MODE

$$NE1 = \frac{Pe}{Tp* \cdot (1+\rho)}$$

**S420**
ESTIMATE FUEL CONSUMPTION
F2 AT OPERATING POINT (NE2)
IN S210

**S430**
ESTIMATE FUEL CONSUMPTION F1 AT
OPERATING POINT (NE1) IN S220

**S440**
NO ◁ F1＜F2 ▷

YES

**S230**
NO ◁ |NE1-NE2|＜α ▷

YES

**S250**
Ne*=NE2

**S240**
Ne*=NE1

TO S130

**FIG.17**

YES IN S290

↓

S500
Nmg2 > N0 ?
(POWER GENERATION
STATE IN S/D)

NO →

↓ YES

S510
SOC > S1 ?

NO →

↓ YES

S530
SOC < S2 ?

NO →

↓ YES

S520
・SOC REDUCING
REQUEST IS ON
・S/D INHIBIT FLAG IS ON

S540
・SOC REDUCING
REQUEST IS OFF
・S/D INHIBIT FLAG
IS OFF

NO IN S280
OR S290

S550
IS S/D INHIBIT FLAG ON ?

← YES

↓ NO

S170
CONTROL SECOND
MG IN ACCORDANCE
WITH TORQUE
TARGET VALUE
Tmg2*

S300
PERFORM SHUTDOWN
CONTROL FOR SECOND
MG (STOP OPERATION
OF INVERTER 220)

↓

END

## INTERNATIONAL SEARCH REPORT

| | International application No. |
|---|---|
| | PCT/JP2010/073524 |

### A. CLASSIFICATION OF SUBJECT MATTER
*B60W10/08*(2006.01)i, *B60K6/445*(2007.10)i, *B60W10/06*(2006.01)i, *B60W10/26*
(2006.01)i, *B60W20/00*(2006.01)i

According to International Patent Classification (IPC) or to both national classification and IPC

### B. FIELDS SEARCHED
Minimum documentation searched (classification system followed by classification symbols)
B60W10/08, B60K6/445, B60W10/06, B60W10/26, B60W20/00

Documentation searched other than minimum documentation to the extent that such documents are included in the fields searched
| Jitsuyo Shinan Koho | 1922–1996 | Jitsuyo Shinan Toroku Koho | 1996–2011 |
| Kokai Jitsuyo Shinan Koho | 1971–2011 | Toroku Jitsuyo Shinan Koho | 1994–2011 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2001-113967 A (Toyota Motor Corp.),<br>24 April 2001 (24.04.2001),<br>paragraphs [0083] to [0100]; fig. 2<br>(Family: none) | 1,12<br>5-8,15<br>2-4,9-11,<br>13-14 |
| Y | JP 2002-30952 A (Honda Motor Co., Ltd.),<br>31 January 2002 (31.01.2002),<br>paragraph [0032]<br>& US 2002/0041167 A1 & DE 10135192 A | 5-8,15 |

☐ Further documents are listed in the continuation of Box C.   ☐ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| 15 March, 2011 (15.03.11) | 29 March, 2011 (29.03.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

<table>
<tr><td>**INTERNATIONAL SEARCH REPORT**</td><td>International application No.<br>PCT/JP2010/073524</td></tr>
</table>

| Box No. II | Observations where certain claims were found unsearchable (Continuation of item 2 of first sheet) |

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

| Box No. III | Observations where unity of invention is lacking (Continuation of item 3 of first sheet) |

This International Searching Authority found multiple inventions in this international application, as follows:

```
   The invention in claim 1 cannot be considered to have a special technical
feature, since the invention does not make a contribution over the prior art
in the light of the contents disclosed in the document 1 (JP 2001-113967 A
(Toyota Motor Corp.), 24 April 2001 (24.04.2001), paragraphs [0083] - [0100],
fig. 2). The following three inventions (invention groups) are involved in
claims.
                                          (continued to extra sheet)
```

1. ☒ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**
☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☒ No protest accompanied the payment of additional search fees.

Form PCT/ISA/210 (continuation of first sheet (2)) (July 2009)

| **INTERNATIONAL SEARCH REPORT** | International application No. |
|---|---|
| | PCT/JP2010/073524 |

Continuation of Box No.III of continuation of first sheet(2)

(Invention 1) the inventions in claims 1 - 4, 12 - 14, the inventions including the matter set forth in claim 2 among claims 8 - 11

(Invention 2) the inventions in claims 5 - 7, 15, the inventions including the matter set forth in claim 5 among claims 8 - 11

(Invention 3) the inventions which do not include both the matter set forth in claim 2 and the matter set forth in claim 5 among claims 8 - 11

Form PCT/ISA/210 (extra sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009196415 A

- JP 2007203772 A